# EUROPEAN PATENT APPLICATION

(11) **EP 3 988 965 A1**
(43) Date of publication of application: **27.04.2022**
(21) Application number: 21203683.4
(22) Date of filing: 20.10.2021
(51) Int. Cl.: G01S 13/76, G01S 13/87, G06Q 10/08, G06F 3/147, G01S 5/14

(54) **METHOD FOR PROVIDING A WORKSPACE WITH A REAL-TIME LOCATION SYSTEM**

(30) Priority: 21.10.2020 IT 202000024826
(71) Applicant: Engynya S.r.l., 47924 Rimini (IT)
(72) Inventor: DE ANGELI, Matteo, 47822 SANTARCANGELO DI ROMAGNA (IT)
(74) Representative: Conti, Marco

(57) **Abstract**

Method for providing a workspace (10) of a real-time locating system (1), RTLS, comprising a step of preparing a locating device (2) connectable to an object (21) to be located and a plurality of anchors, stationary and configured to exchange position signals (52) with the locating device (2), and a step of preparing a plurality of smart electronic labels (3), wherein each smart electronic label (3) of said plurality is mounted on a shelf (4) and comprises an enclosure (31), an electronic display (32) and a processor (33) and is configured for transmitting and receiving position signals (52), so that the smart electronic label (3) defines a anchor of said plurality of anchors.

## Description

This invention relates to a method for providing a workspace with a real-time locating system, RTLS, and an electronic label.

The use of electronic labels is known in the sector of managing warehouses or supermarkets; these electronic labels are commonly mounted on shelves and include a display unit on which an image is displayed, relating, for example, to the goods stored on the shelves. The labels are connected to a control unit for receiving data from it, as a function of which the image is shown on the display. Examples of electronic labels are described in patent documents US2019362300A1 and WO2018125541 A1.

Moreover, in the sector of the management of warehouses or supermarkets, the use of real-time locating systems for locating objects, such as, for example, trolleys, goods and persons, is known. There are various types of locating systems, which vary in terms of the technology used and the methods for processing the data detected by a control unit of the system. For example, there are prior art locating systems with UWB technology. These systems traditionally include a plurality of anchors, stationary relative to a workspace and a tag (UWB), arranged on the object to be located. In the locating systems of this type, the plurality of anchors and the tag positioned on the object communicate with each other in order to identify the distance of the tag from each anchor of said plurality. Knowing the distance of the tag from at least four anchors of said plurality of anchors, a control unit determines the position of the object inside the workspace, with a high precision and reliability. Examples of these ultra-wideband UWB locating systems are described in the following patent documents: US2015355311, US2013063251, US9519047, US8674828 and in the Italian patent document 102018000003687 (in the name of the same Applicant). The prior art locating systems, such as those mentioned above, require the installation, in the warehouse or supermarket, of a special infrastructure; in fact, the anchors are normally installed on the floor and/or on the ceiling. This infrastructure has high costs and represents a major obstacle to the adoption of locating systems. Other examples of methods for providing a workspace with a real-time locating system, RTLS, are provided in patent documents US2004099735, US7152040 and US2001048057; however, not even these documents provide a solution which is able to satisfy the needs of the market.

The aim of the invention is to provide a method for providing a workspace for a real-time locating space, and a device, which overcome the above-mentioned drawbacks of the prior art. Said aim is fully achieved by the method and by the device (i.e. by the electronic label) the according to the invention as characterised in the appended claims.

The invention provides a method for providing a workspace with a real-time locating system, RTLS. The workspace preferably includes a plurality of shelves. The shelves are distributed, preferably, according to one or more lanes. It should be noted that, in addition to or as an alternative to shelves, there might be areas of the workspace dedicated to the storage of specific products.

The method comprises a step of preparing a locating system. In particular, the method comprises a step of preparing a locating device. The locating device is connectable to an object to be located. The object to be located is movable in the workspace. Therefore, the locating device is also movable in the workspace. The term "object to be located" may mean a trolley or, more generally, a vehicle, a person (or operator) and/or goods. The method comprises a step of preparing a plurality of anchors, which are stationary and configured to exchange position signals with the locating device. In particular, each anchor of said plurality of anchors is configured to exchange a position signal with each locating device of said plurality positioned in the workspace. As a function of the position signal, a flight time of said position signal can be calculated, to determine a distance of the locating device from the anchor. The method also comprises, preferably, a step of preparing a processing unit. The processing unit is connected to the anchors of said plurality. The processing unit is configured for determining a position (in particular, the absolute position) of each locating device in the workspace, as a function of the distance of the locating device from the anchors of said plurality. The method comprises a step of preparing a plurality of smart electronic labels. Each smart electronic label of said plurality is preferably mounted on a shelf of said plurality of shelves; according to an embodiment wherein there are no shelves, each smart electronic label may be installed at a specific zone of the warehouse dedicated to the storage of goods. Each smart electronic label of said plurality comprises an enclosure, an electronic display associated with the enclosure and a processor, preferably contained in the enclosure. The processor is configured to receive label data and to show on the electronic display an image representing the label data. For example, the label data can include a code (for example, a bar code) identifying goods which are positioned on the shelf to which the label is associated, and/or a price of the goods. For this reason, the smart electronic label performs a function of electronic label (such as the known electronic labels). Consequently, the step of preparing the plurality of anchors coincides with the step of preparing the plurality of smart electronic labels.

Moreover, each electronic label of said plurality is configured for transmitting and receiving position signals; a distance of the locating device from said smart electronic label of said plurality can be determined by calculating the flight time of a position signal from the locating device to said smart electronic label, or vice versa. For this reason, the smart electronic label defines an anchor of said plurality of anchors of the real-time locating system, RTLS. The smart electronic labels therefore have a dual function: on the one hand, they act as smart electronic labels, on the other hand, they act as anchors of a locating system. In this way, the cost of the locating system is considerably reduced in a warehouse which also includes the use of electronic labels: in fact, it is not necessary to provide a floor or ceiling infrastructure for the anchors of the locating system. Preferably, the method also comprises a step of preparing a rail mounted on said shelf of said plurality of shelves; the term "rail" means a profile made of aluminium or other material applied along a runner of the shelving. The smart electronic label is connected to said rail. In particular, the electronic label is associated by slotting to the rail. Therefore, the rail performs a mechanical support function for the smart electronic label. Preferably, each smart electronic label of said plurality is connected to a rail; one or more electronic labels of said plurality can be connected to each rail.

Preferably, the method also comprises a step of preparing an electric power cable; the electric power supply cable is associated with the rail (that is to say, it runs along the rail and/or is integrated in the rail). The smart electronic tag is connected with said electric power cable to receive an electricity supply. In other words, a cable (or a plurality of cables) is mounted on the rail and there is an electrical power source for powering the electronic labels, by means of the cable. Therefore, the rail can perform a function of electricity supply to the smart electronic label. Preferably, the method also comprises a step of preparing an Internet connection cable associated with the rail; the Internet connection cable runs along the rail or is built into the rail. The smart electronic label is connected to said Internet connection cable for receiving the label data. The rail therefore also performs a function of data connection of the electronic label.

According to an embodiment, the method comprises a step of preparing a connection node, wherein two or more smart electronic labels of said plurality communicate with the connection node to receive from it the label data. In particular, there may be a connection node for each shelf, or for each lane (or shelving), wherein all the smart electronic labels mounted on the shelf and/or on the shelves of that lane are connected to the connection node. The smart electronic labels may receive label data from the connection node (by means of the Internet connection). The smart electronic labels can also receive electricity from the connection node, in addition to or as an alternative to the label data. Moreover, the smart electronic labels can transmit to the data connection node data relative to the positioning signals exchanged with the locating devices present in the workspace, to allow a processing unit connected to the connection node to determine the position of the locating devices.

According to an embodiment, the method comprises a step of replacing a plurality of traditional electronic labels with said plurality of smart electronic labels. In particular, starting from a warehouse equipped with traditional electronic labels, some of the traditional electronic labels are replaced with smart electronic labels; thus, according to this embodiment, there is an "upgrade" of the warehouse, to equip it with geolocation. In this context, it should be noted that it is not necessary for all the electronic labels in the warehouse to be smart electronic labels; in fact, it is sufficient for there to be some of the smart type located in the warehouse, whilst the others may remain traditional labels; this makes the system particularly versatile and flexible. Each traditional electronic label of said plurality comprises an enclosure connectable to a shelf of said plurality, an electronic display mounted on the enclosure and a processor preferably contained in the enclosure; the processor is configured to receive label data and to show on the electronic display an image representing the label data. For this reason, the traditional electronic labels are configured to perform the function of electronic labels, but are without the additional function of the real-time locating system, RTLS.

According to a preferred embodiment, said position signals exchanged between the locating device and the electronic label are ultra-wideband signals, UWB. According to other embodiments, the position signals could be Bluetooth signals (in particular, Bluetooth Low Energy, BLE), or Wi-Fi signals, or other types of signals.

According to an embodiment, the method comprises a step of displaying, on the electronic display of at least one smart electronic label of said plurality (and/or of at least one traditional electronic label of the plurality), of an indicator. The indicator may be, for example, a QR code. Preferably, the indicator is uniquely associated with the electronic label (smart or traditional) and/or with the shelf. The indicator is readable by a reader of an augmented reality system. The augmented reality system may be integrated in a smartphone or a tablet of an operator; the reader can capture the indicator; therefore, the augmented reality system, as a function of the image of the indicator detected by the reader, identifies the shelf on which said indicator is mounted and displays, on a screen of the augmented reality system, information for the operator. This information is configured for guiding the operator to pick up goods from the shelf; preferably, said information includes information representing a presence, on the shelf on which said smart electronic label is mounted, of goods to be picked up. In particular, preferably, the augmented reality system includes an interface or augmented reality screen configured to show, in augmented reality, what the user sees on the shelf (in real time), with the addition of information for guiding the operator in the picking up operation. For example, after identifying the shelf by capturing the indicator, the interface could show what the user sees on the shelf with an overlay of a first colour (for example, green) superposed on the goods, to indicate that these goods are the ones to be picked up, or an overlay of a second colour (for example, red) superposed on the goods, to indicate that these are not the goods to be picked up. Moreover, the interface could show identification codes of the goods to be picked up superposed on the image of the goods, and/or information relative to the quantity and/or to the stock of the goods.

Preferably, the step of displaying the indicator on the electronic label is activated as a function of the position of the locating device associated with an operator (or with the trolley on which the operator moves), said position being determined by means of the locating system; in particular, the indicator is displayed on the displays of the electronic labels, smart or traditional, close to the operator (that is, far from the locating device of the operator less a threshold distance), but not on the displays of the electronic labels far from the operator (that is, far from the locating device of the operator plus the threshold distance). Moreover, preferably, the indicator is displayed on the display for a limited length of time; said length of time may be a predetermined length of time, or it may be determined as a function of the position of the displaying device associated with the operator (or with the trolley on which he/she moves): in fact, the display on each electronic label might be activated when the operator moves towards the electronic label below the threshold distance and is deactivated when the operator moves away from the electronic label more than the threshold distance.

In this context, it should also be noted that the augmented reality system may be integrated in the locating device of the operator (or of the trolley on which the operator moves).

This disclosure also provides an electronic label. In particular, this invention provides a smart electronic label. The electronic label (smart) comprises a enclosure connectable to a shelving, an electronic display mounted on the enclosure and a processor, preferably contained in the enclosure. The processor is configured to receive label data and to show on the electronic display an image representing the label data. The electronic label is a smart electronic label, configured for transmitting and receiving position signals; therefore, depending on the flight time of a position signal sent by the smart electronic label to a locating device, or vice versa, a distance of the locating device from the electronic label can be determined. Consequently, the smart electronic label is configured to perform a function of anchor in a real-time locating system, RTLS.

According to an embodiment, the smart electronic label (or the plurality of smart electronic labels) is equipped with a vibration sensor and/or an accelerometer configured for detecting any impacts against the shelf on which it is mounted. The smart electronic label (in particular, its processor) is therefore configured to send to the node to which it is connected and/or to the central server information relating to an impact which has occurred.

This disclosure also provides a real time locating system, or RTLS. The system comprises a plurality of smart electronic labels according to one or more of the aspects of the invention. The electronic labels of said plurality can be connected to a plurality of shelves located in a workspace. The system also comprises at least one locating device connectable to an object to be located and movable in the workspace. The locating device includes a transceiver configured for exchanging position signals with said plurality of smart electronic labels. According to a preferred embodiment, the transceiver is an ultra-wideband, UWB, transceiver.

According to an embodiment, the system also comprises a plurality of traditional electronic labels; each traditional electronic label of the plurality comprises an enclosure connectable to a shelf of said plurality of shelves, an electronic display mounted on the enclosure and a processor contained in the enclosure; the processor is configured to receive label data and to show on the electronic display an image representing the label data. Each traditional electronic label of said plurality is without the function of anchor in the real-time locating system, RTLS.

The system, according to at least one embodiment, comprises a plurality of connection nodes. Each of these connection nodes is connected to two or more smart electronic labels of said plurality of smart electronic labels, to exchange data with the respective processors. According to an example, each of the connection nodes is connected to the processors of two or more smart electronic labels of said plurality of smart electronic labels.

According to an example embodiment, the connection nodes are connected to the processors of the corresponding labels by means of an Internet connection; in this case, according to an example embodiment, each node (and/or each label) is also provided with its own IP address.

The use of the connection nodes connected to the smart labels (that is, the processors of the corresponding smart labels), for example by means of an Internet connection, allows a fast management of the label data and facilitates any updating of the label data to be displayed on the displays of the respective electronic labels.

According to an example embodiment, the method comprises a step of preparing an Internet connection for the smart electronic labels. Preferably, the smart electronic labels are connected to the Internet through the connection nodes (for example by an Internet connection cable, which, in a possible example, could be located in a rail).

The use of an Internet connection cable located, for example, on a rail allows an effective and simplified management of a plurality of electronic labels located on the same rail.

Moreover, or alternatively, each connection node may be connected to said two or more smart electronic labels of said plurality of smart electronic labels and, if necessary, to one or more traditional electronic labels (if planned), for transmitting electricity. In particular, each connection node may in turn be connected to the electricity network, to receive electricity supply; alternatively, there may be, for each connection node, a battery pack configured for powering the connection node (and therefore the electronic labels, smart and/or traditional, connected to it).

As regards the communication protocol between the smart electronic labels and the locating devices, the following is provided. According to an embodiment, each smart electronic label includes a counter; the processor of each smart electronic label is designed for sending a first position message and simultaneously starting the counter. The locating device is configured for receiving the first message and sending, in response to the first message, a second message including an identification code of the locating device. The processor of each smart electronic label is configured for receiving the second message and, upon receiving the second message, pausing the counter and sending to the connection node connected to it a third message, including: an identification code of the smart electronic label, the identification code of the locating device received with the second message, an indication of the time elapsed between the sending of the first message and the reception of the second message. The connection node is preferably connected to a processing unit.

According to an embodiment, the connection node is equipped with a processor or computer which calculates, upon receiving the third message, the distance between the smart electronic label and the locating device. This operation is preferably repeated for at least two smart electronic labels connected to the node, in such a way that the node can determine the absolute position of the object to be located, as a function of the distance of the object from two or more smart electronic labels. According to an embodiment, the so-called PDOA (Phase Difference of Arrivals) technique is used for determining the position of the object to be located; according to this embodiment, not only the distance between anchor and object to be located is calculated but also the communication angle; according to this embodiment, therefore, it is sufficient to use an anchor (that is, a smart electronic label) to determine the absolute position of the object to be located.

Preferably, each connection node therefore has three functions: the electricity supply of the electronic labels (traditional and smart), the data connection between the processing unit and the electronic labels (traditional and smart), and the calculation of the position of the locating device according to the data received from the smart electronic labels. The connection node then communicates to the processing unit (central) the position of the object in the calculated workspace.

According to an embodiment, the processing unit (central) receives the third message from the connection node and it is therefore the processing unit which calculates the distance between the smart electronic label and the locating device. Also in this case, this operation is preferably repeated for at least two smart electronic labels (connected to the same node or to different nodes) in such a way that, as a function of the distance, the processing unit can determine the position of the object in the workspace. Alternatively, also in this case, the operation may be performed once only and using the PDOA position determining technique.

According to a further embodiment, the processor of the locating device calculates the distance between the smart electronic label and the locating device, on the basis of the flight time of the position signals exchanged with one or more smart electronic labels.

The processing unit may, depending on the position of the object in the workspace, perform various actions; for example, if the object is a trolley, the processing unit may command the trolley to move along a certain path; if the object to be located is a person, the processing unit may send a signal to the person (using a user interface of a device carried by the person). In general, the processing unit may perform functions such as locating trolleys (or objects) for safety purposes, locating goods indirectly through the tracking of all the operations for placing on and removing from the forks of the trolleys, self-identifying goods, automatic inventory, guide systems for trolley operators, warehouse management.

According to an embodiment, the processor is configured to also show locating data on the electronic display, representing a position of the locating device relative to the electronic label. In this case, preferably, the processor of the smart electronic label also receives from the connection node the locating data.

According to an embodiment, the locating device is also equipped with a display for showing locating data, representing a position of the locating device (absolute or relative position relative to one or more labels); in this case, preferably, the processor of the locating device receives the locating data from the connection node or from the processing unit.

The invention also provides a warehouse (or supermarket). The warehouse comprises a plurality of shelves. Preferably, the shelves are located according to a plurality of lanes; more specifically, the warehouse comprises a plurality of parallel lanes, each of which includes a plurality of shelves. The warehouse comprises at least one object to be located. The warehouse also comprises a real-time locating system, RTLS, according to one or more of the aspects of the invention.

It should be noted that the infrastructure described, in particular with reference to the connection nodes connected to the electronic labels, could also be used in a system equipped with traditional electronic labels but not smart electronic labels (thus, in a system in which the electronic labels are not used for the geolocation). In this context, the invention also provides a method for providing a workspace for electronic labels, wherein the workspace includes a plurality of shelves, and wherein the method comprises a step of preparing a plurality of electronic labels, wherein each electronic label of said plurality is mounted on a shelf of said plurality of shelves and comprises an enclosure, an electronic display associated with the enclosure and a processor contained in the enclosure, wherein the processor is configured to receive label data and to show on the electronic display an image representing label data. The method also comprises a step of preparing (at least) one connection node, wherein two or more smart electronic labels are connected to said node with electrical connection and with data connection (preferably via cable) to receive from it the electricity supply and to receive from it label data. Moreover, the method may comprise a step of preparing one or more battery packs, wherein said at least one connection node is connected to said one or more battery packs for receiving electricity supply.

Thus, this invention also relates to a use of an electronic label to form an anchor of a locating system, according to one or more of the features described in the invention; in addition or alternatively, the invention also relates to a use of an electronic label to constitute an indicator uniquely associated with the electronic label and readable by a reader of an augmented reality system. If the electronic label constitutes both a anchor of the locating system and an indicator in an augmented reality system, and the object to be located of the locating system coincides with or is included in a mobile electronic device (for example a smart-phone or a tablet) in which a software is installed for displaying the images seen with the addition of contents according to augmented reality techniques, a control unit communicates with the mobile electronic device and with the electronic label for instructing the electronic label to display the indicator for the augmented reality system in response to the detection of the mobile electronic device close to (for example, at a distance less than a predetermined value) the electronic label (or of the shelf on which it is positioned); the control unit also instructs the electronic label to display content other than the indicator, in response to a lack of detection of the mobile electronic device close to the electronic label (or of the shelf on which it is positioned), or in response to a recognition of the indicator of the electronic label (or of one of the indicators of the shelf on which the electronic label is positioned) by the augmented reality software of the electronic device.

These and other features will become more apparent from the following detailed description of a preferred embodiment, illustrated by way of nonlimiting example in the accompanying drawings, in which:

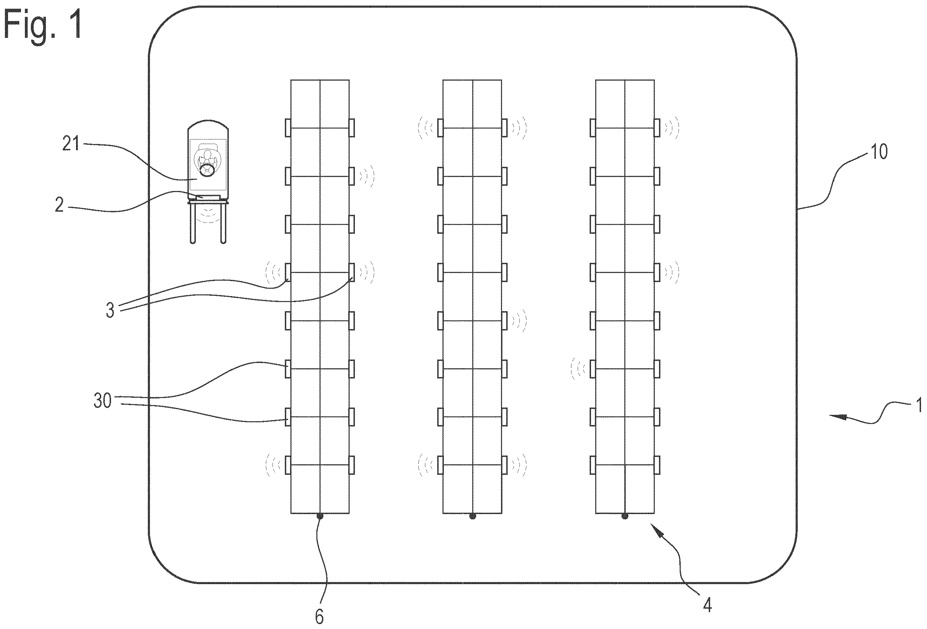

- Figure 1 illustrates a warehouse comprising a real-time locating system, RTLS, according to one or more of the aspects of the invention;

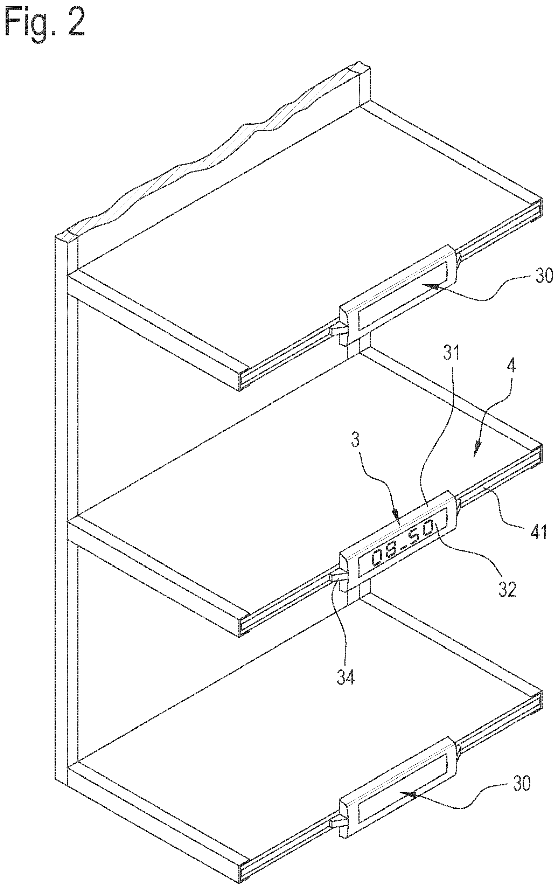

- Figure 2 illustrates a smart electronic label and traditional electronic labels associated with shelves of the warehouse of Figure 1;

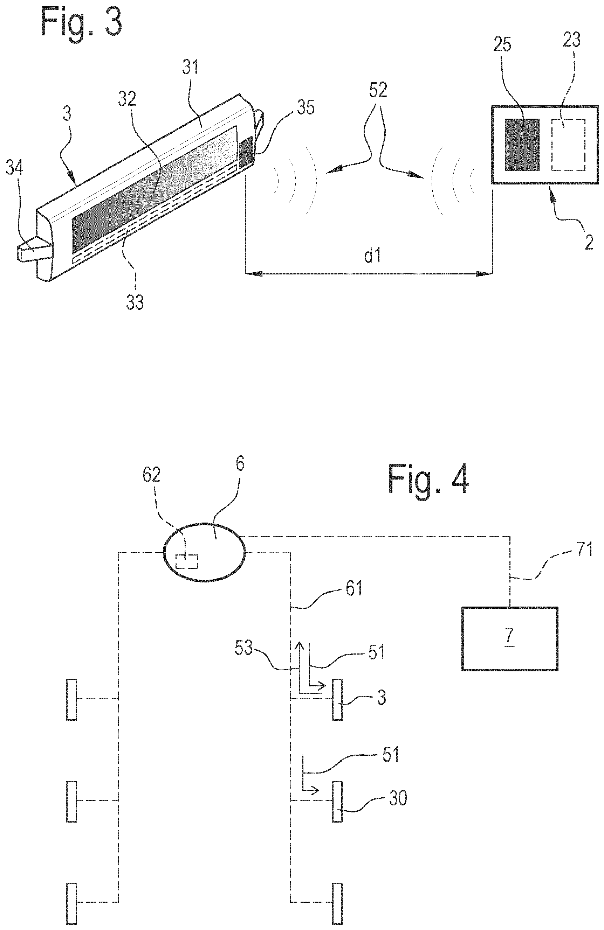

- Figure 3 schematically illustrates a smart electronic label and a locating device of the locating system provided in the warehouse of Figure 1;
- Figure 4 schematically illustrates a connection node connected to a plurality of electronic labels of the locating system provided in the warehouse of Figure 1.

According to an aspect of the invention, the numeral 1 denotes an ultra-wideband, UWB, real-time locating system 1, RTLS. The system 1 is associated with a workspace 10, that is to say, it is configured for locating objects in a workspace 10. The workspace 10 may be defined by a closed environment such as, for example, a warehouse. The system 1 comprises at least one locating device 2 (that is to say, a tag). The locating device 2 is associated with (that is, mounted on) an object 21 to be located; in an example illustrated, the object 21 to be located is a trolley.

The locating device 2 comprises a processor 23 and a transceiver 25. The transceiver 25 may be a UWB, BLE, Wi-Fi or other type of transceiver. The device 2 may comprise an attachment element (not illustrated) configured for attaching the device 2 to the object 21.

The system 1 comprises a plurality of shelves 4. The shelves 4 are preferably distributed in lanes parallel to each other. Each shelving includes a shelf and, along one end of the shelf, a rail 41. In particular, for each lane, at least one vertical structure and one or more shelves 4 are provided; each shelf of a respective shelving 4 has a first side connected to the vertical structure and a second side opposite to the vertical structure and facing towards a transit aisle; the rail 41 is preferably mounted along said second side.

The system 1 comprises a plurality of electronic labels; in particular, the system 1 comprises a plurality of smart electronic labels 3 and a plurality of traditional electronic labels 30. Each electronic label, smart 3 or traditional 30, comprises an enclosure 31, a display (or screen) 32 associated with the enclosure 31, and a processor 33 housed in the enclosure 31; moreover, each electronic label, smart 3 or traditional 30, comprises an element 34 configured for coupling with a rail 41 of a shelf 4 of said plurality of shelves 4. The element 34 may be, for example, shaped to match a profile of the rail 41. Moreover, the smart electronic labels 3 comprise a transceiver 35; the transceiver 35 is preferably a UWB transceiver.

The transceiver 35 of each smart electronic label 3 is configured for sending and receiving position signals 52; similarly, the transceiver 25 of each locating device 2 is configured for sending and receiving position signals 52. The transceiver 25 of each locating device 2 is configured for sending position signals 52 to the transceiver 35 of each smart electronic label 3 and the transceiver 35 of each smart electronic label 3 is configured for sending position signals 52 to the transceiver 25 of each locating device 2. As a function of the flight time of said position signals 52, a distance d1 of the locating device 2 from the smart electronic label 3 can be calculated. The calculation of the distance d1 as a function of the flight time of the position signals 52 may be performed by the processor 33 of the electronic label 3, or by the processor 23 of the locating device 2, or, more preferably, by a central processing unit 7, configured to receive position data from two or more smart electronic labels 3 of said plurality.

In particular, the system 1 comprises a plurality of connection nodes 6. Each connection node 6 is connected to a plurality of electronic labels, smart 3 and/or traditional 30. In an example illustrated, there is a connection node 6 for each lane of shelves 4; thus, all the electronic labels 3, 31 mounted on the shelves 4 of a lane are connected to the connection node 6 of the lane. In particular, the connection 61 between each connection node 6 and the respective plurality of electronic labels 3, 31 is both an electrical connection, for transmitting electricity from the connection node 6 to the electronic labels 3, 31 and a data connection, for exchanging data from the connection node 6 to the electronic labels 3, 31, and (in the case of the smart electronic labels 3) vice versa.

According to an embodiment, each connection node 6 includes a terminal to connect to the electricity network. According to another embodiment, the system 1 comprises one or more battery packs to which the connection nodes 6 are connected, for receiving electricity. In particular, the system may comprise, for each connection node 6, a battery pack which powers the node; the battery pack may be mounted on a rail 41 of the same type as those on which the electronic labels 3, 30 are installed; the battery pack may be modular, that is to say, it may be sized on the basis of the required charge autonomy.

Data transmission between connection node 6 and the smart electronic labels 3 occurs by means of a particular Ethernet protocol which uses only two conductor cables.

Each connection node 6 includes a processor 62. The system 1 also comprises a processing unit (or server) 7 to which the connection nodes 6 of said plurality are connected. The system 1 comprises a connecting network 71 between the connection nodes 6 of said plurality and the processing unit 7. The connection network 71 is a LAN data connection network; the connection network 71 may be, for example, an Ethernet data network (in particular, the network could include an Ethernet connection which uses only two poles instead of the eight commonly used).

Thus, each connection node 6 receives label data 51 from the processing unit 7 and transmits it to the smart electronic labels 3 and/or to the traditional electronic labels 30. Moreover, each connection node 6 receives, from each smart electronic label 3 connected to it, position data 53, representing the flight time of position signals 52 which the smart electronic label 3 has exchanged with the locating device 2.

According to an embodiment, the processor 62 of the connection node 6 calculates the distance d1, as a function of the position data 53, and sends the distance d1 to the processing unit 7 (together with identification data of the smart electronic label 3, that is, of its position, and of the locating device 2).

According to another embodiment, the connection node 6 sends the position data 53 to the processing unit 7 (together with identification data of the smart electronic label 3, that is, of its position, and of the locating device 2) and the processing unit 7 calculates the distance d1. Preferably, each connection node 6 is positioned on a head of a lane (or shelving). According to another embodiment, the processor 23 of the locating device 2 calculates the distance d1 on the basis of the flight time of the position signal 52 sent by the transceiver 25 of the locating device 2 to a smart electronic label 3 and of the flight time of the position signal 52 sent by the transceiver 35 of the smart electronic label 3 to the locating device. In particular, the locating device 2 may send through the transceiver 25 a first message and starts, simultaneously, a counter associated with the device 2; the smart electronic label 3 upon receiving the first message replies sending, by means of the transceiver 35, a second message including an identification code of the smart electronic label 3; the locating device 2, upon receiving the second message, calculates the distance d1 of the smart electronic label on the basis of the flight time elapsed between the sending of the first message and the reception of the second message. Moreover, on the basis of a knowledge (pre-stored in a memory to which the processor 23 has access) of the position of the smart electronic label 3 (identified by its identification code), the processor 23 of the device 2 can determine its absolute position, in particular by repeating this operation for at least two smart electronic labels 3 or the use of the PDOA technique. According to this embodiment, it is not therefore necessary for the electronic labels 3 to transmit data to the nodes 6 (and therefore to the processing unit 7), since they act only as references for the locating devices 2. Thus, according to this embodiment, it is not necessary for there to be a data connection which runs along the rails 41, but the presence of electricity supply cables is sufficient.

The processing unit 7 or the processor 62 of the node may also identify an absolute position of the locating device 2 in the workspace, as a function of two or more distances d1 of the locating device 2 relative to two or more smart electronic labels 3.

## Claims

1. A method for providing a workspace (10) with a real-time locating system (1), RTLS, wherein the workspace (10) includes a plurality of shelves (4) and wherein the method comprises a step of preparing a locating device (2), movable in the workspace (10) and connectable to an object (21) to be located, and a plurality of anchors, which are stationary and configured to exchange position signals (52) with the locating device (2),
**characterised in that it** comprises a step of preparing a plurality of smart electronic labels (3), wherein each smart electronic label (3) of said plurality:
- is mounted on a shelf (4) of the plurality of shelves (4) and comprises an enclosure (31), an electronic display (32) associated with the enclosure (31) and a processor (33) contained in the enclosure (31), wherein the processor (33) is configured to receive label data (51) and to show on the electronic display (32) an image representing the label data (51) so that the smart electronic label (3) acts as an electronic label;
- is configured for transmitting and receiving position signals (52), wherein a distance (d1) of the locating device (2) from the smart electronic label (3) of the plurality can be determined by calculating the flight time of a position signal (52) from the locating device (2) to the smart electronic label (3), or vice versa, so that the smart electronic label (3) defines an anchor of the plurality of anchors of the real-time locating system (1), RTLS.

2. The method according to claim 1, comprising a step of preparing a rail (41) mounted on the shelf (4) of the plurality of shelves (4), wherein the smart electronic label (3) is connected to the rail (41).

3. The method according to claim 2, comprising a step of preparing an electric power cable associated with the rail (41), wherein the smart electronic label (3) is connected with said electric power cable for receiving electricity supply.

4. The method according to claim 2 or 3, comprising a step of preparing an Internet connection cable associated with the rail (41), wherein the smart electronic label (3) is connected to said Internet connection cable for receiving the label data (51).

5. The method according to claim 4, including a step of preparing a connection node (6), wherein two or more smart electronic labels (3) of said plurality communicate with the connection node (6) to receive from it the label data (51).

6. The method according to any one of the preceding claims, comprising a step of replacing a plurality of traditional electronic labels (30) with said plurality of smart electronic labels (3), wherein each traditional electronic label (30) of said plurality comprises an enclosure which is connectable to a shelf (4) of said plurality, an electronic display mounted on the enclosure and a processor contained in the enclosure, wherein the processor is configured to receive label data and to show on the electronic display an image representing the label data, so the traditional electronic label (30) is configured to perform the function of an electronic label, but is free of the additional function of anchor of the real-time locating system (1), RTLS.

7. The method according to any one of the preceding claims, wherein said position signals (52) exchanged between the locating device (2) and the smart electronic label (3) are ultra-wideband signals, UWB.

8. The method according to any one of the preceding claims, comprising a step of displaying, on the electronic display (32) at least one smart electronic label (3) of said plurality, an indicator uniquely associated with the smart electronic label (3) and readable by a reader of an augmented reality system.

9. An electronic label (3), comprising:
- an enclosure (31) connectable to a shelf (4);
- an electronic display (32) mounted on the enclosure (31);
- a processor (33) contained in the enclosure (31);
in which the processor located in the enclosure (33) and configured to receive label data (51) and to show on the electronic tag display (33) an image representing the label data (51),
**characterised in that** the electronic label (3) is a smart electronic label, configured for transmitting and receiving position signals (52), wherein as a function of the flight time of a position signal (52) sent by the smart electronic label (3) to a locating device (2), or vice versa, a distance of the locating device (2) can be determined from the electronic label (3), so the smart electronic label (3) is configured to perform a function of anchor in a real-time locating system (1), RTLS.

10. A real time locating system (RTLS) (1), comprising:
- a plurality of smart electronic labels (3) according to claim 9, connectable to a plurality of shelves (4) provided in a workspace (10),
- a locating device (2) connectable to an object (21) to be located and movable in the workspace (10), wherein the locating device (2) includes a transceiver configured to exchange position signals (52) with said plurality of smart electronic labels (3).

11. The system (1) according to claim 10, comprising a plurality of traditional electronic labels (30), wherein each traditional electronic label (30) of said plurality comprises an enclosure connectable to a shelf (4) of said plurality of shelves (4), an electronic display mounted on the enclosure and a processor contained in the enclosure, wherein the processor is designed to receive label data (51) and to show on the electronic display an image representing label data (51), and wherein each traditional electronic label (30) of said plurality is free of the anchor function in the real-time locating system (1), RTLS.

12. The system (1) according to claim 11, comprising a plurality of connection nodes (6), each of which is connected through an Internet connection to two or more smart electronic labels (3) of said plurality of smart electronic labels (3), for exchanging data with the respective processors (3).

13. The system (1) according to claim 12, wherein each smart electronic label (3) also includes a counter, wherein the processor (33) of each smart electronic label (3) is configured for sending a first position message (52) and for simultaneously starting the counter,
wherein the locating device (2) is configured to receive the first message and send, in response to the first message, a second message including an identification code of the locating device (52).

14. The system (1) according to claim 13, wherein the processor (33) of each smart electronic label (3) is configured for receiving the second message and, upon receiving the second message, pausing the counter and sending to the connection node (6) connected to it a third message, including:
- an identification code of the smart electronic label (3),
- the identification code of the locating device (2) received with the second message,
- and an indication of the time elapsed between the sending of the first message and the receiving of the second message.

15. A warehouse comprising:
- a plurality of shelves (4);
- an object (21) to be located;
- a real time locating system, or RTLS, according to any one of the claims from 10 to 14.
